Europäisches Patentamt

European Patent Office

Office européen des brevets

(19)

(11) Publication number: **0 264 117 B1**

(12) **EUROPEAN PATENT SPECIFICATION**

(45) Date of publication of patent specification: **07.08.91**  (51) Int. Cl.5: **A23L 2/38, A61K 33/00**

(21) Application number: **87115010.8**

(22) Date of filing: **14.10.87**

The file contains technical information submitted after the application was filed and not included in this specification

(54) **Fitness drink powder.**

(30) Priority: **16.10.86 FI 864178**
**29.12.86 US 947369**

(43) Date of publication of application:
**20.04.88 Bulletin 88/16**

(45) Publication of the grant of the patent:
**07.08.91 Bulletin 91/32**

(84) Designated Contracting States:
**AT BE CH DE ES FR GB GR IT LI LU NL SE**

(56) References cited:
**EP-A- 0 181 988**
**DE-A- 3 444 086**
**US-A- 4 312 856**
**US-A- 4 592 909**

(73) Proprietor: **Oy Sinebrychoff AB**
**Mallaskatu 1**
**SF-00120 Helsinki(FI)**

(72) Inventor: **Prinkkilä, Helena Marjatta**
**Ruukinlahdenkatu 9 A 19**
**SF-00200 Helsinki(FI)**
Inventor: **Pajunen, Esko Juhani**
**Topeliuksenkatu 10 B 26**
**SF-00250 Helsinki(FI)**

(74) Representative: **Masch, Karl Gerhard et al**
**Patentanwälte Andrejewski, Honke & Partner**
**Theaterplatz 3 Postfach 10 02 54**
**W-4300 Essen 1(DE)**

Rank Xerox (UK) Business Services

EP 0 264 117 B1

## Description

The present invention relates to a fitness drink powder comprising the following main ingredients:

| | |
|---|---|
| maltodextrine | 60-85% by weight |
| sodium chloride | 0.5-5% " |
| sodium bicarbonate | 10-20% " |
| magnesium chloride | 0.2-3% " |
| malic acid | 3-16% " |

The pH range of an aqueous solution is within the range 5.2 to 5.8.

The fitness drink powder of the present invention may additionally comprise a sweetener, preferably a dipeptide sold under the trademark Aspartame by G.D. Searle & Company, as well as aromas and colourings. If necessary, an anti-agglomeration agent, such as calcium silicate, magnesium silicate or sodium silicate, is added.

A drink prepared from the fitness drink powder of the invention has a pH of 5.2 to 5.8, and it contains 120 to 300 mmol/l maltodextrine (calculated as glucose units), 50 to 150 mmol/l of sodium, 2 to 10 mmol/l of magnesium, 20 to 70 mmol/l of chloride, 20 to 100 mmol/l of bicarbonate and 10 to 30 mmol/l of malic acid, as well as 50 to 150 mg/1 of a sweetener (Aspartame) and small amounts of aromas and colourings.

A specially preferred composition for a ready made fitness drink is the following:

| | |
|---|---|
| maltodextrine (calculated as glucose units) | 170 mmol/1 |
| sodium | 70 " |
| magnesium | 5 " |
| chloride | 30 " |
| bicarbonate | 50 mmol/1 |
| malic acid | 20 " |
| Aspartame | 100 mg/1 |
| natural aroma (lemon) | 700 " |
| permissible colourings | 5 " |

The pH of the drink is about 5.5.

Maltodextrine preferably comprises less than 10% by weight of monosaccharides and disaccharides. A specially preferred maltodextrine is sold under the trademark Maltodextriini by Suomen Nestesokeri, a Finnish company. The carbohydrate content of the said maltodextrine is the following:

| | | |
|---|---|---|
| glucose | less than | 3% by weight |
| maltose | " | 7% " |
| maltotriose | " | 20% " |
| other polysaccharides | 70 to 95% " |

The starch reaction of the said maltodextrine is negative, and it contains less than 1% by weight of

2

conductivity ash.

The fitness drink has a very pleasant taste.

Known in the art are fitness and sport drinks containing sodium chloride, potassium chloride and phosphates as well as sugars (German Patent No. 17 67 652, U.S. Patent No. 1,541,461 and British Patent Application published as No. 2,037,565). There are also products on the market that contain sodium chloride, potassium chloride, magnesium chloride and calcium chloride and phosphates as well as sugar and sugar alcohol.

Some of the known fitness and sport drinks are isotonic (e.g. the product of German Patent No. 17 67 652); most of the current drinks are hypotonic (U.S.Patent No. 1,541,461).

It is essential that the water, salts and energy sources contained in such drinks will be available to the body in an optimal manner. Thus the absorption of said ingredients is dependent on the composition of the solution introduced into the intestines. Only small amounts of water and salts are absorbed of isotonic salt solutions. The absorption of water from the intestines is optimal when the salt concentration is 75 to 120 mmol/l and the glucose concentration 60 to 140 mmol/l (1 to 2.5%). When the glucose concentration exceeds 240 mmol/l, the absorption of water is substantially diminished.

The purpose of the energy supply in these drinks is to maintain the level of sugar concentration in blood at a sufficiently high level during physical exertion. Different carbohydrate energy sources perform differently in this respect and also have an effect on the metabolism of the system. When glucose is ingested during physical stress, also the blood glucose level increases the higher and for the longer time the more concentrated the solution is. Ingestion of glucose before or during physical exertion also increases the blood insulin level. As a result therefrom, the lipolysis of the adipose tissue in the body is inhibited and the fatty acid content in blood decreases, which results in depletion of the energy derived from the body fats and, as a consequence, in more rapid consumption of the body carbohydrate storage and the running out thereof, which again causes a fast decrease in blood sugar (hypoglycaemia) and rapid fatigue.

Fitness drinks are typically ingested at short intervals during physical exertion. Also for this reason, it is essential that the carbohydrate energy source contained in the drink comprises a minimum of monosaccharides and disaccharides, less than 10% of the total amount of the carbohydrate, in order for dental caries not to develop. However, a more serious threat than caries is erosion of the teeth, which is dependent on the acidity of the drink as well as the properties of the fruit acid used. The significance of the prevention of dental erosion is of special significance in the fitness drink, since the drink is most often ingested when the mouth is dry and saliva secretion is low, whereby eroding factors, such as the acidity of the drink, are particularly harmful.

The fitness drink powder of the invention is easily dissolved in water and forms a ready made drink for immediate ingestion. The purpose of ingesting the new fitness drink is, during prolonged physical exertion and stress, such as an athletic performance, training and rambling, as well as before and after such activity, to replenish the loss of body fluid and salts caused by the physical exertion and stress and to prevent the fall in blood sugar content, yet not adversely affecting the metabolism or other functions of the body. Furthermore, said drink will pass rapidly from the stomach into the intestines and will thus not produce an unpleasant sensation of fullness subsequent to ingestion. Said drink further has the advantage of not causing dissolution of the tooth enamel and erosion of the teeth even when ingested continually and regularly at short intervals. The taste of the fitness drink is fresh, and not even repeated ingestion thereof is unpleasant during a strenuous physical performance.

When the composition for the fitness drink powder of the invention was developed, the medical know-how relating to the properties of corresponding drinks was combined in a novel way, complemented by our own research work in essential parts.

Even during prolonged physical stress, the new fitness drink effectively restores the dehydration resulting from sweating. As is known, profuse sweating and the resultant dehydration (2%) impairs the ability of the system to regulate body temperature; greater dehydration (3%) decreases muscular endurance and strength, which cuts down normal performance. Considerable dehydration (over 6%) may even result in fatal complications.

Sweating resulting from strenuous physical exertion and stress may also be related with significant loss of salts, which may be replenished with the fitness drink. Yet sweat contains less salt ions than blood serum, and thus sweating does not cause a decrease in the serum ion content, when body fluid deficiency is restored with drinks having a sufficient salt content.

Physical exertion consumes the energy sources in the body, and as the duration of physical stress is extended, the body carbohydrate storage may be exhausted to such an extent that performance is significantly impaired with resultant fatigue. The carbohydrate obtained from the present fitness drink will pass rapidly into the bloodstream and thus save the body carbohydrate storage and postpone the point of fatigue.

Gastric emptying is regulated by the osmoreceptors in the duodenum, and the passing of fluids is influenced by the amount of fluid intake, the quality and properties of the fluid, as well as the condition of the body. It was found that gastric emptying of the fluid is primarily influenced by the salts used in the drink composition, the quality and amount of the carbohydrate constituting the energy source, and the acidity of the drink.

Dilute sodium chloride solutions pass from the stomach significantly faster than mere water. When the sodium chloride content exceeds 150 mmol/l, gastric emptying again begins to become retarded. Many substances, e.g. sorbitol, potassium chloride and calcium chloride, have a disadvantageous effect of retarding gastric emptying.

The acidity of the content of the stomach, i.e. a decrease in the pH, retards gastric emptying as regulated by the osmoreceptors.

Physiological tests and results
1. Passing of drink from stomach into intestines

The test subjects were given the new fitness drink and, as a reference, a drink containing glucose instead of a glucose polymer; the time for gastric emptying was measured. The salt content of the test solutions was unchanged. The amount ingested was 600 ml; the test solution contained a radiotracer, an isotope 99 mTe DTPA, and the gastric emptying of the solution was followed by a gamma camera.

The results are presented in the table below.

| Carbohydrate | Carbohydrate content | | Half-life for gastric emptying (min) |
| | % | glucose units (mmol/l) | |
| --- | --- | --- | --- |
| maltodextrine | 10 | 550 | $50 \pm 3$ |
| maltodextrine | 5 | 280 | $36 \pm 4$ |
| maltodextrine | 3 | 170 | $22 \pm 4$ |
| glucose | 3 | 170 | $25 \pm 4$ |

Glucose is a potent inhibitor of gastric emptying, and this effect is particularly strong if the amount of glucose in the ingested drink is more than 3% (170 mmol/l). On the other hand, the effect of a long chain sugar compound (glucose polymer) in inhibiting gastric emptying is smaller, i.e. it is more preferable than glucose.

2. Rate of absorption

The test subjects were given the new fitness drink and, as a reference, a drink containing glucose. The content of B-glucose and S-insulin in blood was measured during 0 to 60 minutes.

The results are presented in the table on page 7.

The test results show that when ingesting the fitness drink the top blood glucose levels are achieved appr. 30 minutes after the ingestion of the drink.

Furthermore, the test results show that when the new fitness drink having maltodextrine as a carbohydrate source is ingested, a higher and more prolonged increase in the blood glucose level is achieved in relation

Table: Glucose and insulin content in blood with different carbohydrate sources

| Carbohydrate | Carbohydrate content % | Glucose units (mmol/l) | Blood glucose (mmol/l) Time (min) | | | | | | | Blood insulin (mU/l) Time (min) | | | | | | |
|---|---|---|---|---|---|---|---|---|---|---|---|---|---|---|---|---|
| | | | 0 | 10 | 20 | 28 | 35 | 45 | 60 | 0 | 10 | 20 | 28 | 35 | 45 | 60 |
| maltodextrine | 10 | 550 | 4.7 | 6.0 | 8.0 | 8.8 | 8.9 | 8.6 | 7.2 | 6 | 20 | 48 | 60 | 66 | 66 | 36 |
| maltodextrine | 5 | 280 | 4.6 | 5.5 | 6.8 | 8.2 | 8.2 | 7.3 | 5.6 | 6 | 18 | 33 | 45 | 39 | 32 | 14 |
| maltodextrine | 3 | 170 | 4.6 | 5.5 | 7.2 | 8.0 | 7.2 | 5.8 | 4.8 | 6 | 14 | 27 | 28 | 21 | 13 | 8 |
| glucose | 3 | 170 | 4.5 | 5.5 | 7.0 | 7.4 | 6.2 | 5.0 | 4.3 | 6 | 21 | 35 | 32 | 21 | 13 | 7 |

to the use of glucose, as well as a considerably lower increase in the blood insulin level. The stronger insulin reaction produced by glucose leads to a more intense decrease in the glucose level. In earlier research work it has been shown that the salts used in the new fitness drink also have a lowering effect on the insulin level and an increasing effect on the blood glucose level, compared with a drink in which no salts have been used.

3. Influence on teeth

The eroding influence of fitness drinks on teeth was tested on the basis of the calcium dissolving effect on hydroxyapatite. The pH of the fitness drink samples was regulated to a value between 2.5 and 6.0, and hydroxyapatite was added and the mixtures were incubated for 30 minutes, whereafter the amount of calcium dissolved from hydroxyapatite was determined with an atomic absorption spectrometer.

| | Concentration of dissolved calcium (mmol/l) | |
|---|---|---|
| pH of the sample | Malic acid | Citric acid |
| 2.5 | 5.55 | 5.01 |
| 3.0 | 2.79 | 2.61 |
| 3.5 | 1.60 | 1.45 |
| 4.0 | 0.87 | 0.87 |
| 4.5 | 0.52 | 0.66 |
| 5.0 | 0.32 | 0.50 |
| 5.5 | 0.19 | 0.35 |
| 6.0 | 0.17 | 0.19 |

The test results show that the eroding influence of the new fitness drink on teeth is substantially small when the pH value exceeds 5.0, especially when malic acid is used.

Example 1

## Composition of fitness drink
Composition of unit portion (2 dl of drink)

| Ingredient | Amount (mg) | Content in drink | |
|---|---|---|---|
| maltodextrine | 6000 | 170 | mmol/l |
| sodium chloride | 240 | 20 | " |
| sodium bicarbonate | 850 | 50 | " |
| magnesium chloride | 100 | 5 | " |
| malic acid | 500 | 20 | " |
| Aspartame | 20 | 100 | mg/l |
| natural aroma (lemon) | 140 | 700 | " |
| quinoline yellow | 1 | 5.5 | " |
| patent blue | 0.1 | 0.5 | " |
| | 7.85 g | | |

Preferable to be ingested generally during strenuous, prolonged physical exertion and thereafter.

Example 2

### Composition of fitness drink

Composition of unit portion (2 dl of drink)

| Ingredient | Amount (mg) | Content in drink |
|---|---|---|
| maltodextrine | 4000 | 115 mmol/l |
| sodium chloride | 60 | 5 " |
| sodium bicarbonate | 1360 | 80 " |
| magnesium chloride | 200 | 10 " |
| malic acid | 1100 | 44 " |

Preferable to be ingested especially after or during physical exertion that involves profuse sweating.

Example 3

### Composition of fitness drink

Composition of unit portion (2 dl of drink)

| Ingredient | Amount (mg) | Content in drink |
|---|---|---|
| maltodextrine | 10000 | 280 mmol/l |
| sodium chloride | 120 | 10 " |
| sodium bicarbonate | 1360 | 80 " |
| magnesium chloride | 100 | 10 " |
| malic acid | 1100 | 44 " |

Preferable to be ingested during severe physical stress.

**Claims**

1. A fitness drink powder, **characterized** by comprising the following main ingredients:

| | |
|---|---|
| maltodextrine | 60-85% by weight |
| sodium chloride | 0.5-5% " |
| sodium bicarbonate | 10-20% " |
| magnesium chloride | 0.2-3% " |
| malic acid | 3-16% " |

which powder, when dissolved in water, provides an aqueous solution having a pH value of 5.2 to 5.8.

2. A fitness drink powder as claimed in claim 1, **characterized** in that the composition of a unit portion is

| | |
|---|---|
| maltodextrine | 4-10 g |
| sodium chloride | 170-510 mg |
| sodium bicarbonate | 600-1800 " |
| magnesium chloride | 40-200 " |
| malic acid | 350-1250 " |
| Aspartame | 5-150 " |
| natural aroma (lemon) | 50-300 " |

and that the pH of the aqueous solution is 5.2 to 5.8.

3. A fitness drink powder as claimed in claim 1, **characterized** in that the composition of a unit portion is

| | |
|---|---|
| maltodextrine | 6000 mg |
| sodium chloride | 240 " |
| sodium bicarbonate | 850 " |
| magnesium chloride | 100 " |
| malic acid | 500 " |
| Aspartame | 20 " |
| natural aroma (lemon) | 140 " |
| quinoline yellow | 1 " |
| patent blue | 0.1 " |
| | 7.85 g |

**Revendications**

1. Poudre pour réaliser une boisson tonique, caractérisée en ce qu'elle comporte les ingrédients principaux suivants :

| | |
|---|---|
| maltodextrine | 60-85 % en poids |
| chlorure de sodium | 0,5-5 % " |
| bicarbonate de sodium | 10-20 % " |
| chlorure de magnésium | 0,2-3 % " |
| acide maléique | 3-16 % " |

cette poudre fournissant, à l'état dissous dans l'eau, une solution aqueuse, dont la valeur du pH est comprise entre 5,2 et 5,8.

2. poudre pour réaliser une boisson tonique selon la revendication 1, caractérisée en ce que la composition d'une partie unité est

| maltodextrine | 4-10 g |
|---|---|
| chlorure de sodium | 170-510 mg |
| bicarbonate de sodium | 600-1800 " |
| chlorure de magnésium | 40-200 " |
| acide maléique | 350-1250 " |
| Aspartam | 5-150 " |
| arôme naturel (citron) | 50-300 |

et que le pH de la solution aqueuse est compris entre 5,2 et 5,8.

3. Poudre pour réaliser une boisson tonique selon la revendication 1, caractérisée en ce que la composition d'une partie unité est

| maltodextrine | 6000 mg |
|---|---|
| chlorure de sodium | 240 " |
| bicarbonate de sodium | 850 " |
| chlorure de magnésium | 100 " |
| acide maléique | 500 " |
| Aspartam | 20 " |
| arôme naturel (citron) | 140 " |
| jaune de quinoléine | 1 " |
| bleu patenté | 0,1" |
| | 7,85 g |

**Patentansprüche**

1. Fitness-Getränkepulver, **dadurch gekennzeichnet,** daß es die folgenden Hauptbestandteile enthält,

| Maltodextrin | 60 | – | 85 Gew.% |
|---|---|---|---|
| Natriumchlorid | 0,5 | – | 5 Gew.% |
| Natriumbikarbonat | 10 | – | 20 Gew.% |
| Magnesiumchlorid | 0,2 | – | 3 Gew.% |
| Maleinsäure | 3 | – | 16 Gew.% |

wobei das Pulver in Wasser gelöst eine wässerige Lösung mit einem pH-Wert von 5,2 bis 5,8 ergibt.

2. Fitness-Getränkepulver nach Anspruch I, dadurch gekennzeichnet, daß eine Einheitsportion folgende Zusammensetzung aufweist,

| Maltodextrin | 4 | – | 10 | g |
|---|---|---|---|---|
| Natriumchlorid | 170 | – | 510 | mg |
| Natriumbikarbonat | 600 | – | 1800 | mg |
| Magnesiumchlorid | 40 | – | 200 | mg |
| Maleinsäure | 350 | – | 1250 | mg |
| Aspartame | 5 | – | 150 | mg |
| Natürliches Aroma (Zitrone) | 50 | – | 300 | mg |

und der pH-Wert der wässerigen Lösung 5,2 bis 5,8 ist.

3. Fitness-Getränkepulver nach Anspruch 1, dadurch gekennzeichnet, daß eine Einheitsportion folgende Zusammensetzung aufweist:

| Maltodextrin | 6000 | mg |
|---|---|---|
| Natriumchlorid | 240 | mg |
| Natriumbikarbonat | 850 | mg |
| Magnesiumchlorid | 100 | mg |
| Maleinsäure | 500 | mg |
| Aspartame | 20 | mg |
| Natürliches Aroma (Zitrone) | 140 | mg |
| Chinolingelb | 1 | mg |
| Patentblau | 0,1 | mg |
| | 7,85 | g |